# EUROPEAN PATENT APPLICATION

(11) **EP 2 120 224 A2**
(43) Date of publication of application: **18.11.2009**
(21) Application number: 09160260.7
(22) Date of filing: 14.05.2009
(51) Int. Cl.: G08C 17/00

(54) **A method and communication system for controlling appliance device using a mobile device**

(30) Priority: 14.05.2008 GB 0808741; 27.04.2009 KR 20090036694
(71) Applicant: Samsung Electronics Co., Ltd., Suwon-si Gyeonggi-do (KR)
(72) Inventor: Hedge, Rajeev, Suwon-si, Gyeonggi-do (KR)
(74) Representative: Boakes, Jason Carrington

(57) **Abstract**

A communication system and a method for controlling an application using a mobile device are provided. The system including an application including a screen for transmitting audio signals and for displaying a selected video image on a portion of the screen, and a mobile device for outputting audible signals corresponding to the audio signals, for selecting a video image, and for controlling the appliance to display the selected video image on the screen of the appliance.

## Description

### 1. Field of the Invention:

The present invention relates to a method and communication system for controlling other devices using a mobile device. More particularly, the present invention relates to the control of appliances, such as televisions, by mobile devices, such as mobile telephones.

### 2. Background to the Invention:

Some TeleVisions (TV) can be operable in a picture-in-picture mode, in which different video content can be displayed on different portions of a single screen. However, the picture-in-picture mode is set up and controlled by a single user with a single remote control device, and is not optimised for enjoyment by multiple users. Only the user with the remote control device has control over the television, and when multiple video images (i.e., pictures) are displayed, the television will only output sound (i.e., audio content) corresponding to one of the pictures, while the other pictures are presented as video only.

Also, when viewing a TV in the picture-in-picture mode, it is not possible for a plurality of individuals with different language preferences to watch videos together on the TV, or other display devices, such as a Personal Computer (PC), without at least one individual having to compromise. That is, the TV or the PC can output audio in only one selected language.

Therefore, a need exists for a method and communication system for controlling a TV according to a plurality of users' preferences.

### SUMMARY OF THE INVENTION

An aspect of the present invention is to address at least the above-mentioned problems and/or disadvantages and to provide at least the advantages described below. Accordingly, an aspect of the present invention is to provide a control method and communication system for interaction between appliances and mobile devices.

Another aspect of the present invention is to provide a method and communication system for controlling an appliance device using a mobile device.

In accordance with an aspect of the present invention, a communication system is provided. The system includes an appliance, including a screen, for transmitting audio signals and for displaying a selected video image on a portion of the screen, and a mobile device for outputting audible signals corresponding to the audio signals, for selecting a video image, and for controlling the appliance to display the selected video image on the screen of the appliance.

In accordance with another aspect of the present invention, a method for controlling an appliance using a mobile device is provided. The method includes transmitting, by an appliance, audio signals to a mobile device, outputting, by the mobile device, audible signals corresponding to the audio signals, selecting, by the mobile device, a video image and controlling the appliance to display the selected video image on a screen of the appliance.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 is a schematic representation of a communication system according to an exemplary embodiment of the present invention;
FIG. 2 is a schematic representation of a communication system according to an exemplary embodiment of the present invention;
FIG 3 is a schematic representation of a communication system according to an exemplary embodiment of the present invention;
FIG. 4 is a schematic representation of a communication system according to an exemplary embodiment of the present invention;
FIG. 5 is a schematic representation of a communication system according to an exemplary embodiment of the present invention;
FIG. 6 is a block diagram illustrating components of a communication system according to an exemplary embodiment of the present invention;
FIGs. 7A and 7B illustrate an exchange of messages in a communication system according to an exemplary embodiment of the present invention; and
FIG. 8 illustrates an exchange of messages in a communication system according to an exemplary embodiment of the present invention.
Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

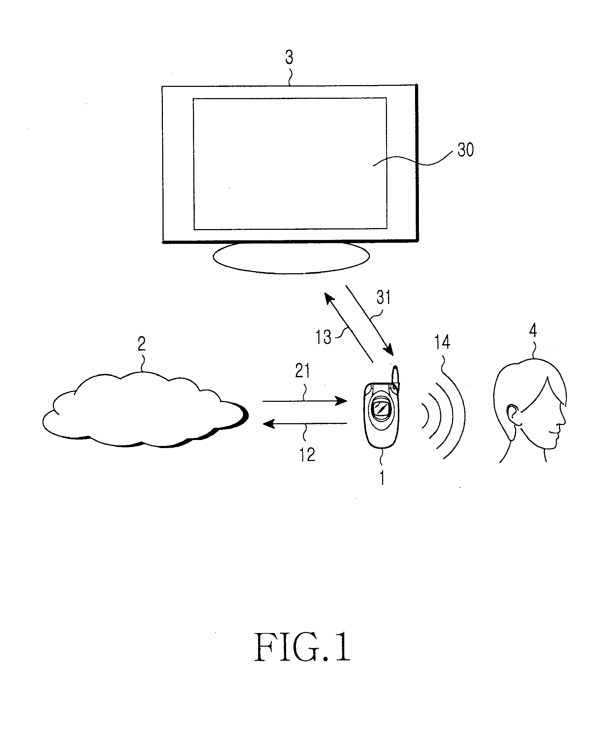

FIG. 1 is a schematic representation of a communication system according to an exemplary embodiment of the present invention.

Referring to FIG. 1, the communication system includes a mobile device 1 in the form of a mobile phone handset which includes a first interface means (not illustrated) to provide wireless communication between the mobile device 1 and a communication network 2. The wireless communication includes wireless signals 21 transmitted from the communication network 2 to the mobile device 1, and wireless signals 12 transmitted from the mobile device 1 to the communication network 2. The first interface means includes a receiver and transmitter means in the mobile device 1 provided by a single transceiver module, for example. The communication system may also include an appliance 3 in the form of a TeleVision (TV), to provide both video image signals and audible signals to a person. The TV 3 includes a screen 30 for displaying video images and speakers (not illustrated) for outputting audio to users in the TV 3 vicinity in certain modes of operation. In an exemplary implementation, the TV 3 also includes an appliance interface means (not illustrated) and the mobile device 1 comprises a second interface means (not illustrated). The second interface means and the appliance interface means provide wireless communication between the mobile device 1 and the TV 3, by transmitting wireless signals 13 from the mobile device 1 to the TV 3, and wireless signals 31 from the TV 3 to the mobile device 1. The TV 3 also transmits an audio signal to the mobile device 1 by means of the wireless communication (i.e., the wireless signal 31 may include the audio signal), and the mobile device outputs an audible signal 14 corresponding to the received audio signal to a user 4.

In an exemplary implementation, the first interface means of the mobile phone provides wireless voice communication between the mobile device 1 and the communication network 2. The mobile device 1 may perform one or more functions normally associated with a remote control device for the TV 3 and may be operable to control channel selection, volume, brightness and the like. For example, the TV 3 detects when the mobile device 1 is within its vicinity and then provides control of one or more of its functions to the mobile device 1. As a result, a user of the mobile device 1 entering the vicinity of the TV 3 may be automatically allocated control of the TV 3 without locating the remote control device. In an exemplary implementation, the audio signal transmitted from the TV 3 to the mobile device 1 includes audio content corresponding to a video image, file, or program being displayed on the screen 30 of the TV 3 and directly outputs the audio content from the mobile device 1 instead of the TV 3 speakers. As a result, the user may have the ability to listen to the audio content more discreetly without disturbing other people within the vicinity of the TV 3. For example, in a home environment, a user of the mobile phone may be able to listen to an audio file corresponding to a particular video image via the mobile device 1 while others are free to read a book or magazine, or indulge in other activities in relative peace and quiet. Alternatively, in a public environment, such as a sports club or bar area, users may be able to listen to audio content, such as commentary on a sporting event, without the commentary being directly output from the TV 3, which would possibly be annoying to other people in the public environment having no interest in the displayed event.

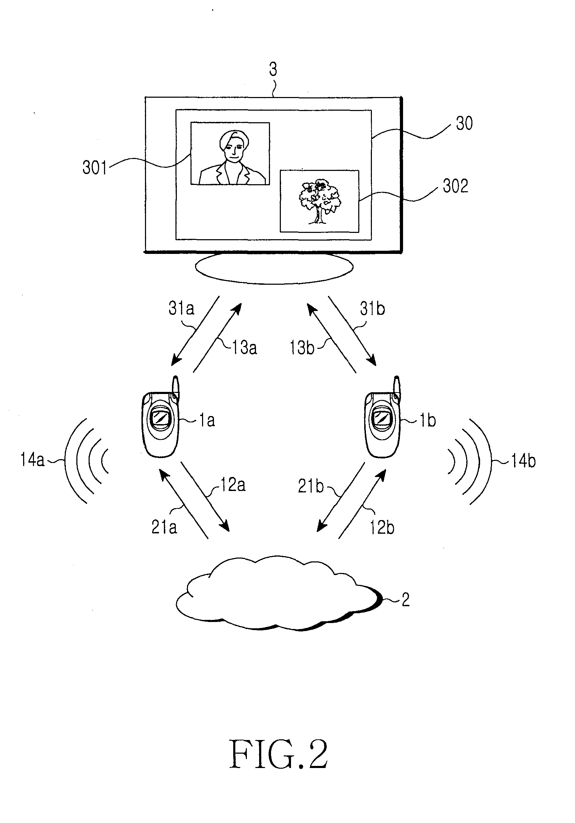

FIG. 2 is a schematic representation of a communication system according to an exemplary embodiment of the present invention.

Referring to FIG 2, the communication system includes a TV 3 having a screen 30 for displaying video images. The communication system further includes two mobile devices 1a and 1b. Each mobile device includes a respective first interface for wirelessly communicating with a communication network 2 and a respective second interface for wirelessly communicating with the TV 3. The TV 3 displays video images on its screen and transmits a respective audio signal wirelessly to the second interface of each mobile device 1a, 1b. Each mobile device 1a, 1b then outputs a respective audible signal 14a, 14b, corresponding to the respective received audio signal, to a user.

Each mobile device 1a, 1b further controls the TV 3 via the respective second interface. The wireless signals transmitted from the mobile devices 1a, 1b to the TV 3 are denoted by arrows 13a, 13b and the wireless signals transmitted from the TV 3 to the mobile devices 1a, 1b are denoted by arrows 31a and 31b. Arrows 12a, 12b, 21a and 21b denote the wireless signals transmitted between the mobile devices and the communication network 2. In an exemplary implementation, the mobile device 1a controls the TV 3 to select a video image and display the video image on a portion 301 of the display 30. Similarly, the mobile device 1b may be operated by a user to control the TV 3 to select a different video image and display the different video image on a second portion 302 of the display 30. Thus, the two video selections are displayed on different respective portions of the screen. In an exemplary implementation, the different portions are completely separate areas of the screen. However, some video selections being displayed may overlap, or one image may be displayed completely within another image. The TV 3 is arranged to transmit an audio signal wirelessly to the first mobile device 1a, the audio signal including audio content corresponding to the image displayed in portion 301 of the screen. Similarly, the TV 3 transmits a second audio signal to the second mobile device 1b including audio content corresponding to the video illustrated in the second portion 302 of the screen. Thus, different images may be displayed on the display 30 with different corresponding audio signals being output to the users via the respective mobile devices. The system enables two different users to select and watch their choice of video image on the TV 3, and receive the corresponding audio via their mobile devices.

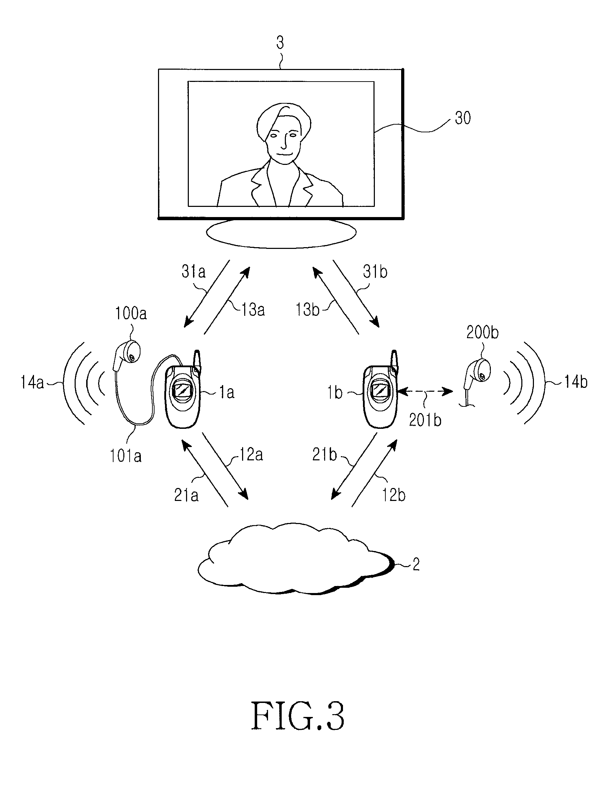

FIG. 3 is a schematic representation of a communication system according to an exemplary embodiment of the present invention. Referring to FIG. 3, the communication system includes a TV 3 for displaying a single video image (e.g., a video file, clip, program and the like) on its screen 30. The communication system also includes two mobile devices 1a and 1b within the vicinity of the TV 3. Each mobile device 1a, 1b has a respective first interface providing wireless communication, using wireless signals 12a, 12b, 21a and 21b, between the communication network 2 so that users of the mobile devices may make and receive voice calls. Also, each mobile device 1a, 1b includes a suitably arranged interface to provide wireless communication between the TV 3. Although a single video file is displayed on the screen 30, the communication system is arranged so that the users of the mobile devices 1a, 1b are able to operate the mobile devices 1a, 1b to select which audio content they desire to receive to accompany the displayed video. Thus, the mobile devices 1a, 1b are not limited to receiving the same audio content. For example, the user of the mobile device 1a may operate the mobile device 1a to transmit a wireless signal 13a for selection of an English language audio content to accompany the displayed video. An audio signal including the English language audio content is transmitted to the first mobile device 1a in a wireless signal 31a from the TV 3. In contrast, the user of the mobile device 1b may transmit a wireless signal 13b for selection of a French language commentary to accompany the displayed video, and receives and audio signal 31b including the French commentary wirelessly from the TV 3.

Rather than each mobile device outputting its audible signal 14a, 14b from a built-in speaker, each mobile device 1a, 1b outputs the audible signal 14a, 14b from a respective earphone or earpiece. The mobile device 1a includes an earpiece 100a connected to its main body portion by a wired link 101 a. In contrast, the mobile device 1b includes a wireless headset including an earpiece 200b. The main portion or handset of the mobile device 1b is in wireless communication 201b with the wireless headset and the wireless link provided between the network 2.

The communication system illustrated in FIG. 3 enables different users to choose different language audio content, or different commentaries to accompany a particular video image being displayed on the TV 3. Furthermore, by outputting the audible signals containing the chosen audio contents from the earphone or earpieces, each user may enjoy their selected audio without interference from the other user.

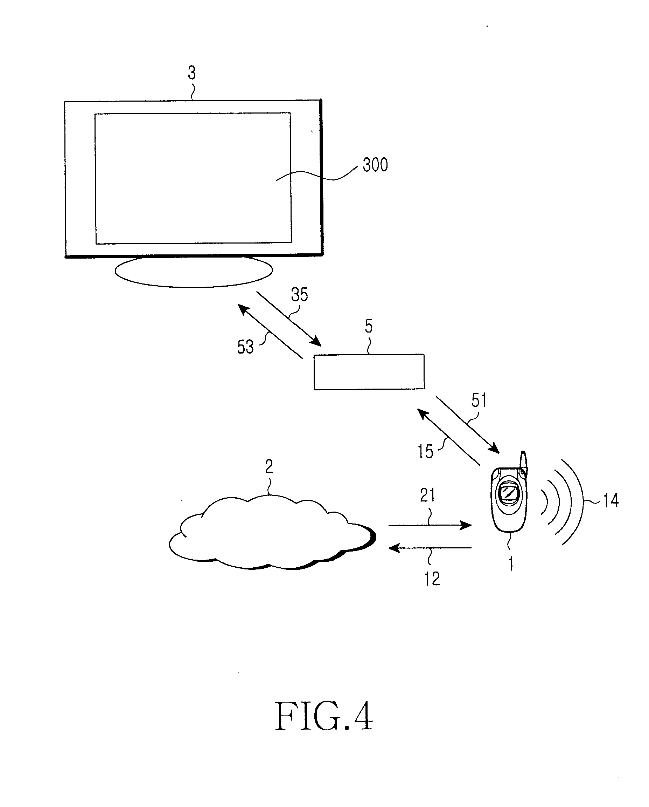

FIG. 4 is a schematic representation of a communication system according to an exemplary embodiment of the present invention.

Referring to FIG. 4, the communication system includes a mobile device 1 in the form of a telephone handset having a first interface to provide wireless communication with a communication network 2. Wireless signals 12 and 21 are exchanged between the handset 1 and the communication network 2. The communication system also includes an appliance 3 in the form of a TV that includes a screen 300. The TV and the mobile phone 1 communicate wirelessly with each other. However, in contrast, the TV does not itself comprise an appliance interface means. Instead, the communication system includes an intermediate device 5 which includes the appliance interface means. The mobile device 1 includes a second interface means to communicate with the appliance interface means of the intermediate device 5 via an exchange of wireless signals 51 and 15. The intermediate device 5 is connected to the appliance 3 so that signals 35 may be transmitted from the appliance 3 to the intermediate device 5, and signals 53 may be transmitted from the intermediate device 5 to the appliance 3. A connection providing the exchange of the signals 35 and 53 may be a wired link or a wireless link. Although the communication system includes the intermediate device 5, the mobile device 1 may be operable to control the appliance 3 wirelessly. Similarly, the appliance 3 may transmit an audio signal to the mobile device wirelessly. The mobile device then outputs an audible signal 14 corresponding to the audio signal received from the appliance 3 via the intermediate device 5.

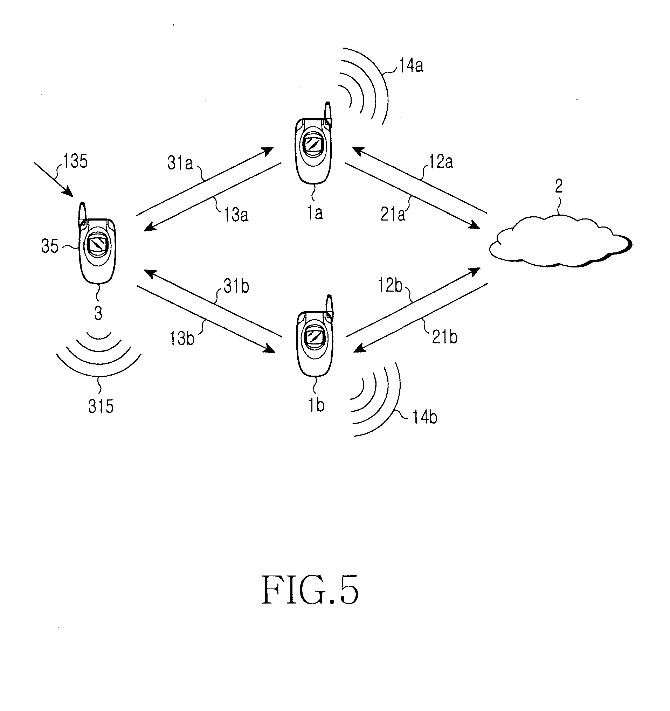

FIG. 5 is a schematic representation of a communication system according to an exemplary embodiment of the present invention.

Referring to FIG. 5, the communication system includes an appliance 3 in the form of a radio having an antenna 35 to receive radio signals 135 from a remote broadcasting source. The radio includes at least one speaker (not illustrated) to directly output an audible signal 315 to a user within the vicinity. The communication system also includes a plurality of mobile devices 1a, 1b, each including a respective first interface means to provide wireless communication, using wireless signals 12a, 12b, 21a and 21b, between the mobile devices 1a, 1b, a communication network 2 and a respective second interface means. The radio 3 includes an appliance interface means (i.e., a wireless interface means), where the respective second interface means (i.e., wireless signals 13a, 13b, 31a and 31b) and the appliance interface means provide wireless communication between the radio 3 and each of the mobile devices 1a, 1b. Each mobile device 1a, 1b is operable to control the radio 3 via a wireless link to select respective audio content. The radio 3 wirelessly transmits an audio signal including the respective selected audio content to each mobile device 1a, 1b. Each mobile device 1a, 1b is then arranged to output an audible signal for a user. Different users may select different audio content from the radio 3 and receive the audio content via their mobile devices 1a, 1b. The different audio content received by the mobile devices 1a, 1b may be in addition to or as an alternative to the radio 3 emitting audio content directly from its loudspeaker or loudspeakers. Accordingly, different users in the vicinity of the radio 3 are not limited to listening to the same audio content. Instead, the users are provided with an audio content choice and may listen to their selected audio content by means of their selective phones. Furthermore, even if one mobile device user is in the vicinity of the radio 3, the user may be able to use their mobile device to control the radio 3 and select audio output remotely. A user may also operate their mobile device to select from a plurality of different radio channels. The user may operate the mobile device to control other aspects of the radio 3, for example volume, tone and the like.

As described above, the appliances may be televisions and radios. However, the invention is not limited thereto. For example, the appliances may also be computers, message boards, projectors, display screens and units, theatre displays and screens, and the like.

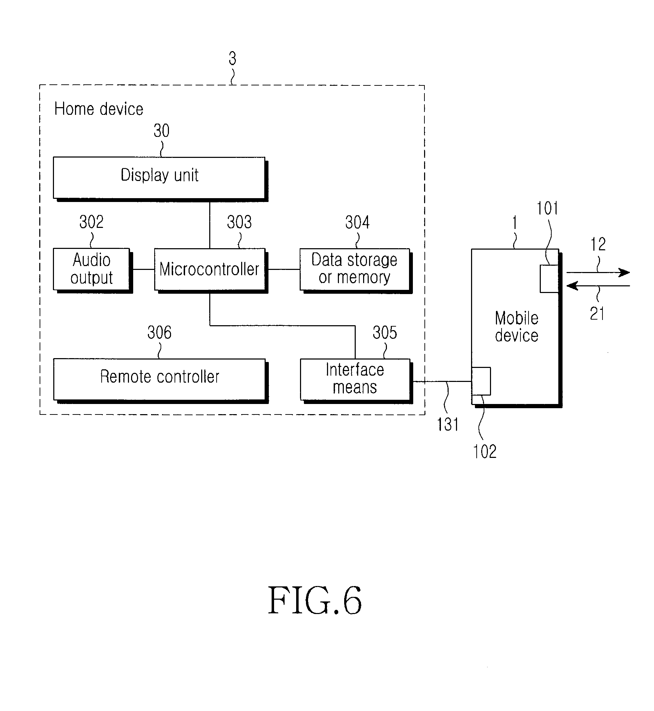

Exemplary embodiments of the present invention will now be described with reference to FIGs. 6, 7 and 8.

In an exemplary embodiment of the present invention, a communication system provides control of individual picture-in-picture elements using one or more mobile devices, in which each mobile device is equipped with a first interface means and a second interface means.

The first interface means includes a modem processor for making and receiving calls over existing radio technologies, such as a Global System for Mobile Communication (GSM), a Code Division Multiple Access (CDMA), an Unlicensed Mobile Access (UMA) and the like.

The second interface means (i.e., a second communication interface) may be either physical (i.e., having separate physical radio characteristics compared to the first interface means) or logical (i.e., only occupying a logical channel within a sole/single physical communication interface). The first interface means and the second interface means may be separate physical entities (e.g., a GSM interface and a WiFi interface), or may be provided by a single physical interface (e.g., a WiFi interface).

The mobile device is capable of simultaneous communication over both communication interfaces (i.e., the mobile device may communicate at the same time over the first interface means and the second interface means). Application services existing on the mobile device are also capable of concurrent execution along with communicating over the second interface.

The communication system also includes one or more appliances (e.g., home devices). The appliance may be a TV. However, different appliances may also be used.
The home device is capable of communicating with the mobile device over the mobile device's second communication interface, in which either the home device (i.e., an appliance) itself comprises suitable wireless interface means (i.e., an appliance interface means), or the communication system further includes an enabling device (i.e., an intermediate device) in connection (e.g., physical or wireless) with the home device. The enabling device includes a suitable wireless interface means which is capable of communication with the mobile device's second interface means.
Accordingly, the mobile device may perform all functionality originally performed by a TV remote controller. More particularly, the mobile device addresses situations where there are multiple users watching a TV in picture-in-picture mode.
In an exemplary implementation, a well defined communication protocol is used for communication between the mobile device and the TV over a second interface means of the mobile device and an appliance interface means. As a result, a Universal Plug and Play (UPnP) protocol is used. However, different protocols may also be used.
The mobile devices and appliance interaction according to the UPnP protocol (i.e., standard) includes a process for initial discovery and registration. The process for initial discovery and registration is well known and well defined in the UPnP protocol. Therefore, a detailed description of the process will be omitted. In an exemplary embodiment of the present invention, changes or deviations that are required in the UPnP protocol will be described.

FIG. 6 is a block diagram illustrating components of a communication system according to an exemplary embodiment of the present invention.

Referring to FIG.. 6, the communication system includes a home device 3 (i.e., a TV) that includes a display unit or screen 30, a micro controller 303, an audio output means 302 (e.g., loudspeakers), a remote controller 306, data storage or memory 304 and an interface means 305 for wirelessly communicating with a second interface means 102 of the mobile device 1. In an exemplary implementation, the home device 3 includes the interface means 305. However, the interface means 305 may be external to the home device 3, for example, in a separate device. The home device 3 includes a wireless communication link 131 between the mobile device 1. The mobile device 1 includes a first interface means 101 for transmitting wireless signals 12 to, and receiving wireless signals 21 from a communication network. Operations of the communication system will be described below.
After an initial registration process of the mobile device 1 with the home device 3, the TV 3, being a control point, transmits a list of its capabilities to the mobile device 1 in an Extensible Markup Language (XML) format. The XML format includes Boolean values for playing video, playing audio, support of picture-in-picture, changing channels, changing volume, changing brightness, changing contrast, powering down, multiple audio channel decoding support, multiple video channel decoding support, hard disk presence and details, and the like.

The TV also transmits a list of events that it may transmit to the mobile device if requested for in the registration process. The list of events include, but are not limited to power up which will cater only for soft power up, power down only when there is a graceful power down, channels changed by the TV which includes tuning into external devices, for example, a Digital Versatile Disc (DVD) player, information related to new channel numbers of audio channels, number of subtitles present, picture-in-picture mode enabled, external devices connected physically, hard disk full, registration status of other control points, and the like.

The mobile device 1 may recognize the list of capabilities, and allow the user to control the TV. For example, the mobile device 1 may be operated to change channels of the TV. A user of the mobile device 1 chooses to change the channel via a special user interface provided. The mobile device 1 then transmits the changed channel information over the UPnP protocol which formats the changed channel information as an XML file and transmits the XML file to the control point connected to the TV. The TV receives the XML file and changes the channel. Once the channel is changed, a "Channel changed event" is generated. Since the mobile device 1 is previously registered for the channel changed event a message formatted as an XML file by the UPnP protocol on the TV is transmitted over the wireless link 131 to the mobile device. Upon receipt of the XML file, the mobile device displays a success indication to the user over a specially designed user interface.

If another user enters a room, the other user's mobile device (i.e., mobile device 2) registers with the control point running on the TV. In other words, the mobile device 2 within the vicinity of the TV generates a registration event on the control point. The registration information is transmitted to the mobile device 1. The user of the mobile device 1 may choose to turn on a picture-in-picture mode, the second user of the mobile device 2 may choose to turn on the picture-in-picture mode or at least one of the users may turn on picture-in-picture mode using the TV remote controller, which may still be operable to control the TV even though each mobile device also has control. Once the picture-in-picture mode is enabled, an event is generated on the TV and transmitted to all the mobile devices.

Then, the mobile device 1 and the mobile device 2 are randomly assigned windows on the TV. The two users are now allowed to control the video channels on their individual picture windows. The audio content from the respective videos are streamed to the respective mobile devices. These devices may further stream their respective audio content to Bluetooth headsets, for example, of the respective mobile devices.

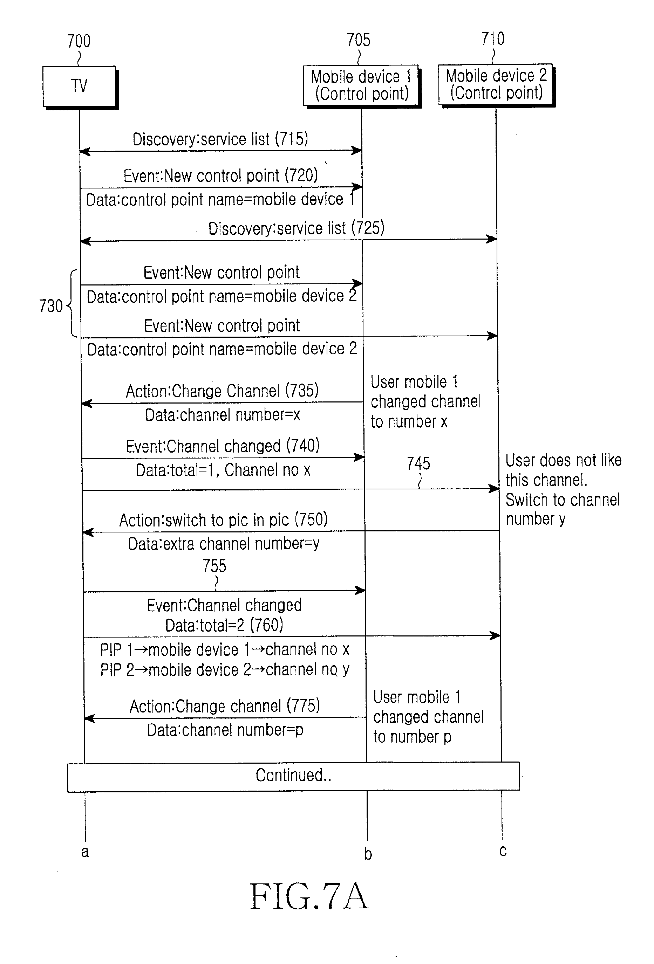

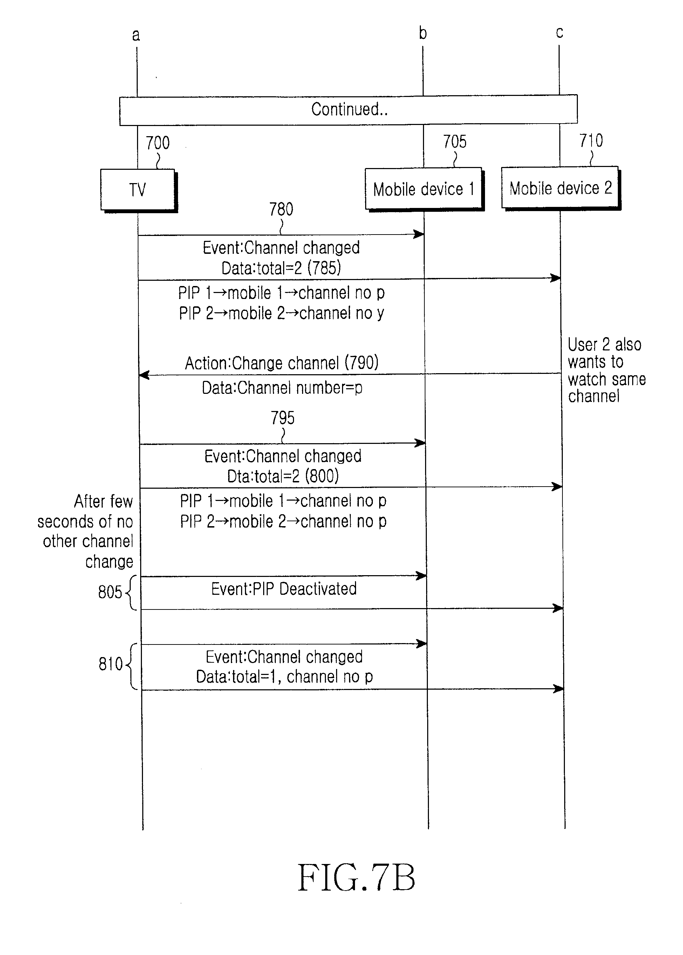

Messages exchanged when exerting individual control over picture-in-picture elements are illustrated in FIG. 7, which may be applied for any number of mobile phones or picture-in-picture elements without changing the protocol.
In an exemplary implementation, mobile device 2 may become part of the communication system or network. The mobile device 1 and the mobile device 2 may be used to control the TV, allowing respective users to watch different video images with respective audio content being transmitted to the respective mobile device.
Also, the mobile devices may remotely control the TV and address situations where there are multiple users watching TV with different language preferences.
In an exemplary implementation, each mobile device transmits the following information among the list of other capabilities: Boolean values to indicate whether it has capability to convert text to speech, number of languages it supports, and its own language preference.

After an initial registration, the TV (i.e., a control point) transmits a list of its capabilities to the mobile device in XML format. The list of capabilities may include, but are not limited to, the Boolean values for playing video, playing audio, support of picture-in-picture, changing channels, changing volume, changing brightness, changing contrast, powering down, multiple audio channel decoding support, multiple video channel decoding support, hard disk presence and details, and the like.

The mobile device also transmits a list of events that it may transmit to another mobile device if requested for in the registration process. The list of events includes, but is not limited to- power up, which caters only for soft power up, power down when there is a graceful power down, channels changed by the TV include tuning into external device, for example, a DVD player, information on new channel numbers of audio channels, number of subtitles present, picture-in-picture mode enabled, external devices connected physically, hard disk full, registration status of other control points, and the like

The mobile device recognizes the list of capabilities and allows the user to control the TV. Therefore, the mobile device may be operated to change channels, as described above.

An exemplary case in which another user (with mobile phone 2) enters the room and registers with the control point running on the TV is considered below.
Arrival of the user with mobile device 2 may generate a registration event on the control point. The registration information is transmitted to mobile device 1.
Either of the two users may change the channel to play a video image that supports multiple languages including but not limited to DVD's, broadcast channels with dual audio and the like. The users may change the channel either using the TV remote controller or using their individual mobile devices. If both users have the same language preference, then the same audio is played over the audio system of the TV. Alternatively, if both users have different language preferences, then if audio for both languages is available the respective audio of choice (i.e. in the selected language) is streamed to the user's mobile headsets over a UPnP protocol.

One of the mobile devices may be treated as the master mobile device, and audio for the master mobile device may be optionally played on the TV's main audio system. The master mobile device may either be the mobile device that chooses to play the video or the first mobile device to have audio preference equal to the majority.
If audio for at least one language is not available, then subtitles for languages of choice may be individually streamed to the respective mobile devices.
The mobile device may also convert text to speech and play the speech onto a headset. Whenever streaming is used, the streaming may be used as already defined in the UPnP protocol.

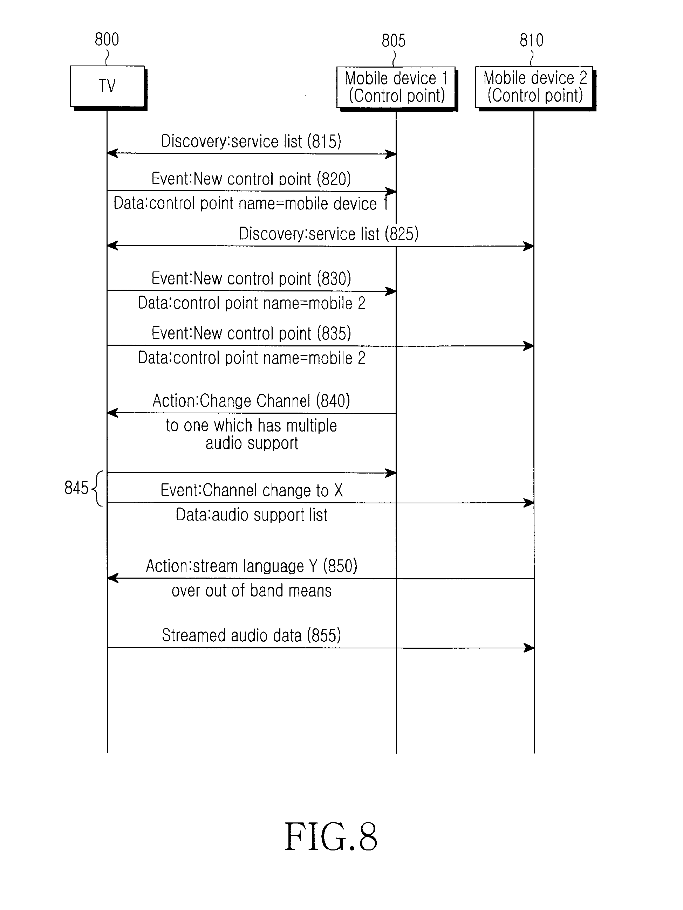

A message sequence diagram depicting an exchange of messages for providing different users with different audio to accompany corresponding video output is illustrated in FIG. 8.

FIGs. 7A and 7B illustrate an operation between TV and mobile devices by transmission and receiving of messages in a communication system according to an exemplary embodiment of the present invention.

Referring to FIG. 7A, a TV 700 detects a mobile device 1 705 as a control point and transmits a service list to the mobile device 1 705 in step 715. The TV 700 transmits an event message to inform of a new control point to the mobile device 1 705 in step 720. The event message includes data that represents a name of the new control point, which is the mobile device 1 705.

The TV 700 detects a mobile device 2 710 as a control point and transmits a service list to the mobile device 2 710 in step 725. The TV 700 transmits an event message to inform of the new control point to the mobile device 1 705 and the mobile device 2 710 in step 730. The event message includes data that represents a name of the new control point, which is the mobile device 2 710.

After the mobile device 1 705 changes a channel to number x, the mobile device 1 705 transmits an action message to the TV 700 which represents the channel change in step 735. The action message includes data that represents a channel number(x). The TV 700 receives the action message and transmits an event message to inform of the channel change to the mobile device 1 705 and the mobile device 2 710 in step 740 and step 745, respectively. The event message includes a total number (1) and a channel number(x).

Because the mobile device 2 710 which transmits the action message does not prefer the channel number x, the mobile device 2 710 changes the channel number to number y, and transmits an action message to the TV 700 which represents a switch to Picture-In-Picture(PIP) mode in step 750. The action message includes an extra channel number y. The TV 700 receives the action message and transmits an event message to inform of the channel change to the mobile device 1 705 and the mobile device 2 710 in step 755 and step 760, respectively. The event message includes a total number (2). In other words the channel number of the mobile device 1 705 is 'x' in PIP 1 mode, the channel number of the mobile device 2 710 is 'y' in PIP 2 mode. The mobile device 1 705 transmits an action message to inform the channel change to the TV 700 in step 775 when the mobile device 1 705 changes a current channel number 'x' to channel number 'p'. The action message includes a channel number 'p'. Referring to FIG. 7B, the TV 700 receives the action message in step 775 and transmits an event message to inform of the channel change to the mobile device 1 705 and the mobile device 2 710 in step 780 and step 785, respectively. The event message includes a total number (2). In other words, the channel number of the mobile device 1 705 is 'p' in PIP 1 mode and the channel number of the mobile device 2 710 is 'y' in PIP 2 mode. The mobile device 2 710 transmits an action message to inform of the channel change in step 775 when the mobile device 2 710 wants to watch a channel of the mobile device 1 705 in step 790. The action message includes a channel number 'p'. The TV 700 receives the action message and transmits an event message to inform of the channel change to the mobile device 1 705 and the mobile device 2 710 in step 795 and step 800, respectively. The event message includes a total number (2). In other words the channel number of the mobile device 1 705 is 'p' in PIP 1 mode, the channel number of the mobile device 2 710 is 'p' in PIP 2 mode.
If there is no other channel change, the TV 700 transmits an event message to inform that the PIP mode is deactivated to the mobile device 1 705 and the mobile device 2 710 in step 805. The TV 700 transmits an event message to inform of the channel change to the mobile device 1 705 and the mobile device 2 710 in step 810. The event message includes a total number (1) and a channel number 'p'.

FIG. 8 illustrates an operation between TV and mobile devices by transmission and receiving of messages in a communication system according to an exemplary embodiment of the present invention.

Referring to FIG. 8, the TV 800 detects a mobile device 1 805 as a control point and transmits a service list to the mobile device 1 805 in step 815. The TV 800 transmits an event message to inform of a new control point to the mobile device 1 805 in step 820. The event message includes a name of the new control point, which is the mobile device 1 (805).

The TV 800 detects a mobile device 2 810 as a control point and transmits a service list to the mobile device 2 810 in step 825. The TV 800 transmits an event message to inform of a new control point to the mobile device 1 805 and the mobile device 2 810 in step 830 and step 835, respectively. The event message includes data that represents a name of the new control point, which is the mobile device 2 810.

The mobile device 1 805 transmits an action message which represents the channel change that has multiple audio support to the TV 800 in step 840. The TV 800 that received the action message transmits an event message to inform of the channel change to a number x to the mobile device 1 805 and the mobile device 2 810 in step 845. The event message includes an audio support list. The mobile device 2 810 transmits an event message which represents to select stream language Y in step 850. The TV 800 which receives the event message transmits a streamed audio data to the mobile device 2 810 in step 855.

Certain aspects of the present invention can also be embodied in the form of hardware, software or a combination of hardware and software. For example, the software may be stored in the form of a volatile or a non-volatile storage device, such as, a Read Only Memory (ROM) that is erasable or rewritable, in the form of a memory device, such as, a Random Access Memory (RAM), memory chips, device or integrated circuits, an optically or magnetically readable medium, such as, a Compact Disc (CD), a DVD, a magnetic disk or magnetic tape, and the like. It will be appreciated that the storage devices and storage media are machine-readable storage devices that are suitable for storing a program or programs including instructions that implement the exemplary embodiments of the present invention when executed. Accordingly, the exemplary embodiments of the present invention provide a program including a code for implementing a system or method and a machine-readable storage device for storing the program. Further, the programs may be conveyed electronically via any medium, such as a communication signal carried over a wired or wireless connection.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A communication system for controlling an appliance using a mobile device, the communication system comprising:
an appliance, including a screen, for transmitting audio signals and for displaying a selected video image on a portion of the screen; and
a mobile device for outputting audible signals corresponding to the audio signals, for selecting a video image, and for controlling the appliance to display the selected video image on the screen of the appliance.

2. The system of claim 1, wherein the appliance transmits an audio signal corresponding to the selected video image to the mobile device.

3. The system of claim 1, wherein the mobile device selects at least one audio signal including different audio contents.

4. The system of claim 3, wherein the mobile device selects a first video image, controls the appliance to display the first video image on a first portion of the screen, selects a second video image and controls the appliance to display the second video image on a second portion of the screen,
wherein, the first video signal comprises a first audio signal corresponding to the first video signal and the second video signal comprises a second audio signal corresponding to the second video signal.

5. The system of claim 4, wherein the mobile device selects one of the first audio signal and the second audio signal including different audio contents.

6. The system of claim 4, wherein the appliance detects whether at least one mobile device is present within a vicinity of the appliance, and registers the at least one mobile device with the appliance to control the appliance, when the at least one mobile device is detected.

7. A method for controlling an appliance using a mobile device, the method comprising:
transmitting, by an appliance, audio signals to a mobile device;
outputting, by the mobile device, audible signals corresponding to the audio signals;
selecting, by the mobile device, a video image;
controlling, by the mobile device, the appliance to display the selected video image on a screen of the appliance and
displaying, by the appliance, the selected video image on the screen.

8. The method of claim 7, further comprising transmitting, by the appliance, an audio signal corresponding to the selected video image to the mobile device.

9. The method of claim 7, further comprising selecting, by the mobile device, at least one audio signal including different audio contents.

10. The method of claim 9, further comprising:
selecting, by the mobile device, a first video image, and controlling, by the mobile device, the appliance to display the first video image on a first portion of the screen; and
selecting, by the mobile device, a second video image and controlling, by the mobile device, the appliance to display the second video image on a second portion of the screen,
wherein, the first video signal comprises a first audio signal corresponding to the first video signal and the second video signal comprises a second audio signal corresponding to the second video signal.

11. The method of claim 10, further comprising selecting by the mobile device, one of the first audio signal and the second audio signal including different audio contents.

12. The method of claim 7, further comprising:
detecting, by the appliance, whether at least one mobile device is present in a vicinity of the appliance; and
registering the at least one mobile device with the appliance to control the appliance by the mobile device, when the at least one mobile device is detected.
